# EUROPEAN PATENT APPLICATION

(11) **EP 4 769 058 A1**
(43) Date of publication of application: **01.07.2026**
(21) Application number: 25216257.3
(22) Date of filing: 17.11.2025
(51) Int. Cl.: G05F 1/46

(54) **MULTI-MODE RECONFIGURABLE VOLTAGE REGULATOR**

(30) Priority: 26.12.2024 US 202419002301
(71) Applicant: INTEL Corporation, Santa Clara, CA 95054 (US)
(72) Inventor: KUMAR, Raghavan, Hillsboro, 97124 (US); MATHEW, Sanu, Portland, 97229 (US); KRISHNAMURTHY, Harish, Beaverton, 97006 (US); GONG, Minxiang, Portland, 97229 (US)
(74) Representative: Viering, Jentschura & Partner mbB Patent- und Rechtsanwälte

(57) **Abstract**

An apparatus comprises a push-pull regulation loop (PPRL), an input terminal, an output terminal, and a plurality of flying capacitor (FC) circuits. The plurality of FC circuits comprises a corresponding plurality of capacitors. The PPRL comprises a PMOS transistor, an NMOS transistor, and a control circuit. The input terminal and the output terminal are coupled to a node of the PPRL via a rail. FC circuits of the plurality of FC circuits are coupled to each other. At least a first FC circuit of the plurality of FC circuits is coupled to the rail. A remaining subset of the plurality of FC circuits is coupled to the first FC circuit. An FC circuit of the plurality of FC circuits further comprises at least a first transistor switch and a second transistor switch coupled to a corresponding capacitor of the plurality of capacitors.

## Description

### BACKGROUND

Cryptographic circuits, such as Advanced Encryption Standard (AES), Rivest-Shamir-Adleman (RSA), and Elliptic Curve Digital Signature Algorithm (ECDSA), are vulnerable to Correlation Power Analysis (CPA) side-channel attacks (SCAs), where an adversary monitors current signatures or electromagnetic (EM) traces emanating from the die to decipher the value of embedded secret keys. This vulnerability exists due to the correlation between engine current traces and switching activity at the crypto engine's circuit nodes. As switching activity in a digital logic circuit is dependent on its primary inputs (plaintext data and secret keys), the attacker can construct activity models for each key guess and correlate it to the externally observable current signatures. For example, the attacker can construct Hamming-weight (HW) and Hamming-distance (HD) models of vulnerable circuit nodes for various key guesses and compute the correlation of measured signatures against these switching-activity models. With a sufficient number of measurements, the correct key guess can emerge, displaying a significantly higher correlation with physical data and compromising the security of the cipher.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings listed below.
FIG. 1A is a graph of measured AES-128 current/EM traces, in accordance with some embodiments.
FIG. 1B is a graph associated with CPA on an unprotected AES-128 cryptographic engine, in accordance with some embodiments.
FIG. 1C is a graph of measured RSA current/EM traces and successful SPA on an unprotected RSA-4K cryptographic engine, in accordance with some embodiments.
FIG. 2 is a block diagram of a secure integrated voltage regulator (SIVR) with a push-pull regulation loop (PPRL), in accordance with some embodiments.
FIG. 3 illustrates a diagram of an SIVR architecture using a recycling capacitor, in accordance with some embodiments.
FIG. 4 is a diagram 400 of a SIVR architecture where a SIVR circuit is configured to operate as an LDO clamp, in accordance with some embodiments.
FIG. 5 is a flow diagram of an example method for manufacturing an SIVR, in accordance with some embodiments.
FIG. 6 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

As used herein, the term "IO" indicates input/output. As used herein, the term "R-C" indicates resistance and capacitance. As used herein, the term "Rx" indicates receiver (or receive). As used herein, the term "Tx" indicates transmitter (or transmit). As used herein, the term "TRX" indicates transceiver. As used herein, the term "UCIe" indicates Universal Chiplet Interconnect Express. As used herein, the term "Vref" indicates reference voltage. As used herein, the term "Vin" indicates input voltage, and "Vout" indicates output voltage. As used herein, the terms "serially coupled," "serially connected," and "connected in series" are synonymous to each other and indicate a serial connection between two or more components/circuits where the serial connection can be based on a direct or indirect electrical connection between the two or more components/circuits. As used herein, the terms "parallel coupled," "parallel connected," and "connected in parallel" are synonymous to each other and indicate a parallel connection between two or more components/circuits where the parallel connection can be based on a direct or indirect electrical connection between the two or more components/circuits.

In some aspects, countermeasures to enhance SCA resistance can employ integrated voltage regulators, random masking, duplicate data paths, and current equalization using switched capacitors and pseudo-hysteresis controllers, incurring high area or performance overheads.

While low-dropout (LDO) regulators with random injected noise, shunt bleeders, and buck converters with randomized control offer significant side-channel suppression in the time domain, they are less effective against frequency-domain attacks. In contrast, arithmetic countermeasures like random masking, heterogeneous Galois-field arithmetic, and current-equalization modify the frequency content of current traces within cycle boundaries without significantly transforming time-domain characteristics. The disclosed techniques include a secure integrated voltage regulator (SIVR) that achieves effective side-channel leakage suppression uniformly across time- and frequency-domain SCA by breaking the correlation between the measured current signature and the data-dependent on-die switching activity. As a result, the attacker is presented with a flat current profile while attempting to mount a CPA attack on the underlying cryptographic engine, rendering the attack ineffective.

Previous SCA-resistant solutions described above are ineffective against combined time/frequency-domain analysis and also impose significant area/energy overheads on the underlying crypto engine. The solutions are also often dependent on the cryptographic algorithm used in the engine. On the other hand, the disclosed SIVR offers a crypto-agnostic solution that protects the underlying engine irrespective of the specific algorithm/arithmetic being computed.

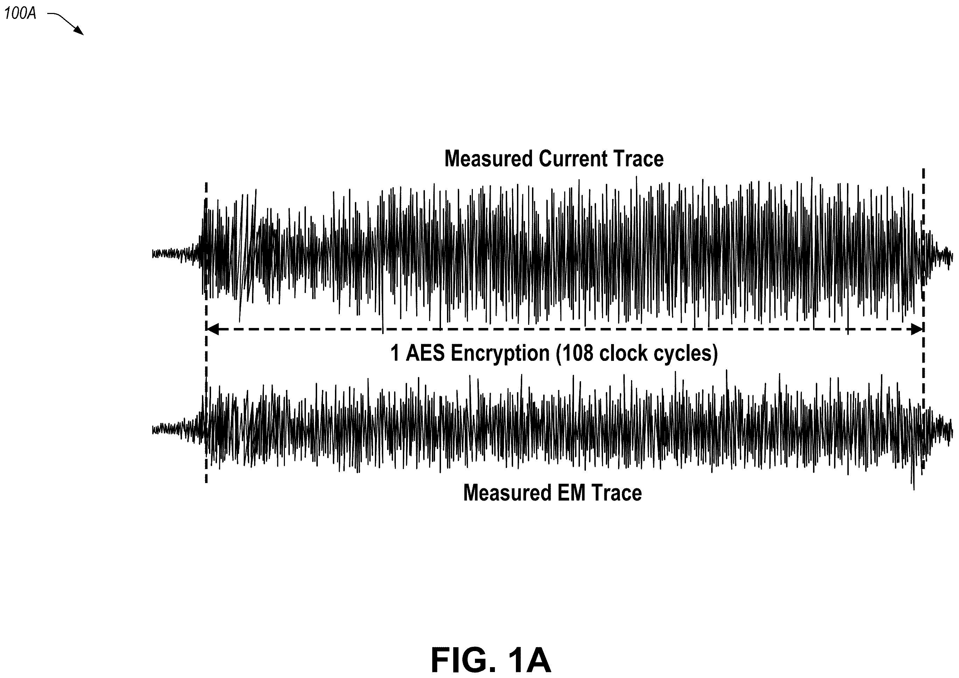

FIG. 1A is a graph 100A of measured AES-128 current/EM traces, in accordance with some embodiments.

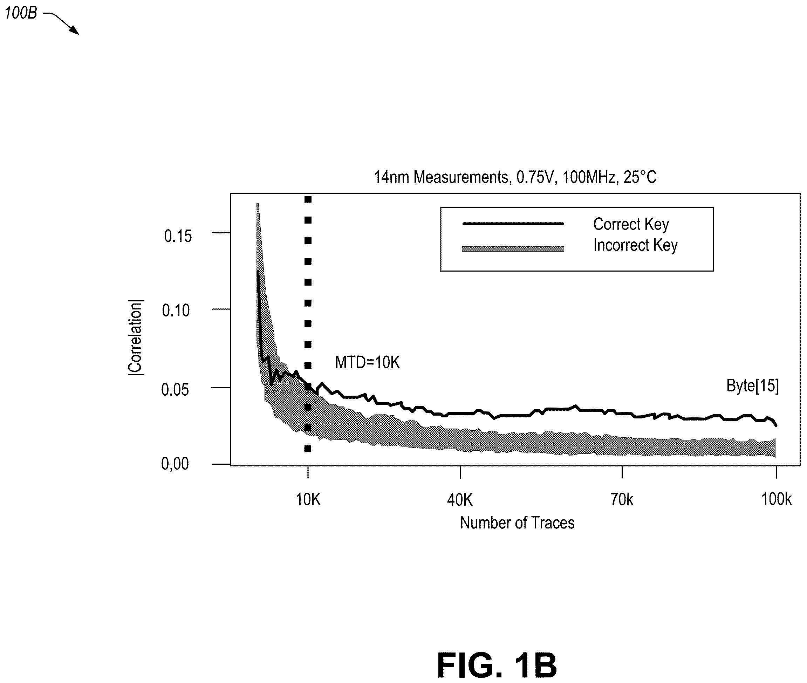

FIG. 1B is a graph 100B associated with CPA on an unprotected AES-128 cryptographic engine, in accordance with some embodiments.

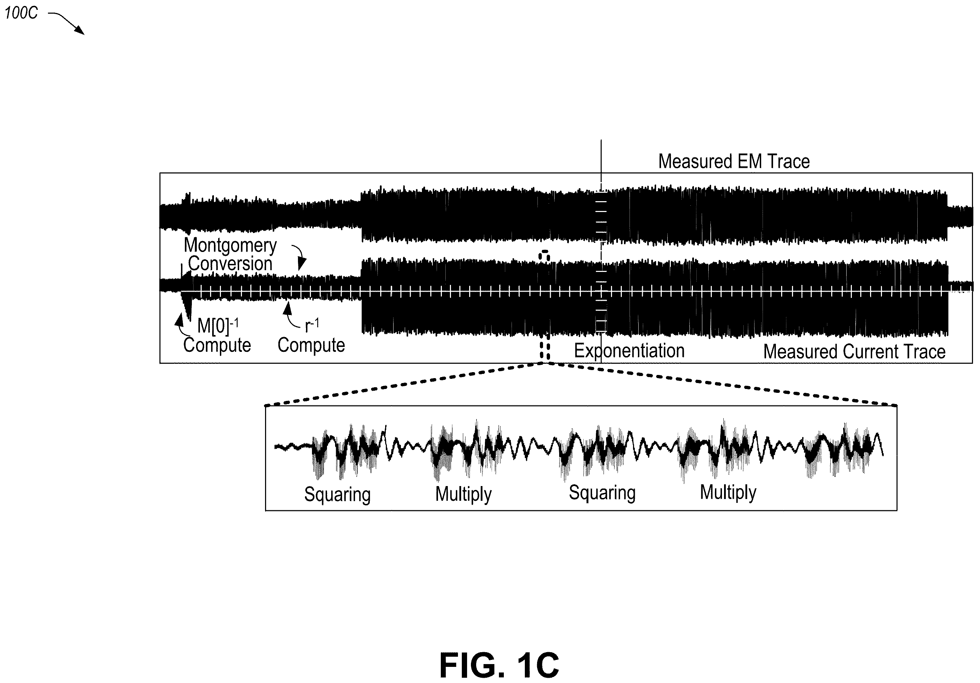

FIG. 1C is a graph 100C of measured RSA current/EM traces and successful SPA on an unprotected RSA-4K cryptographic engine, in accordance with some embodiments.

SCA-resistant crypto engines strive to break this data dependency by introducing randomness into the switching activity through integrated voltage regulators and random masking. Alternately, a flat data-independent current profile is produced using dual-rail logic data paths or current equalization using switched capacitors. In some aspects, series-connected low-dropout (LDO) regulators with random injected noise, shunt bleeders, and buck converters with randomized control can be used to distort and randomize the current signatures in both time and frequency domains. However, the power requirements of a cryptographic engine span a wide range from a few microwatts for lightweight ciphers to several watts for high-bandwidth AES, RSA-4K, ECC, etc. A single regulator configuration may not provide high-efficiency regulation across this entire range, motivating a multimode reconfigurable IVT for providing algorithm-agnostic SCA resistance.

A lightweight AES-128 engine designed in a 14nm process occupies a total area of 4900µm2 with a latency of 108 cycles to produce a 128b ciphertext and a total power consumption of 5mW. FIG. 1A and FIG. 1B show current and electromagnetic traces measured from a lightweight AES-128 engine with 108-cycle latency to complete the 10 rounds of AES encryption. A CPA attack on such traces reveals 1 byte of the key in 10,000 traces. All 16 key bytes were extracted with around 25K encryptions.

On the other hand, an RSA engine has a latency of 22M cycles to produce a 4K ciphertext and occupies a total area of 0.072 mm2. At 0.75V, the RSA engine consumes a total power of 33mW, with a measured leakage power of 0.14mW, resulting in an energy efficiency of 2.5Mbps/W in RSA-4K mode.

Modular exponentiation is the key operation behind RSA encryption and decryption operations. During modular exponentiation, the inputs undergo squaring and multiplication operations when the exponent bit is 1, while only squaring is performed when the exponent bit is 0. Timing attacks targeting variable latency RSA operations can be mitigated by performing constant latency exponentiation, where a dummy multiplication is performed when the exponent bit is 0. However, timing-resistant RSA designs are vulnerable to power and EM SCA attacks by exploiting the subtle differences in power/EM signatures between the normal and dummy multiplications.

A simple power analysis (SPA) attack on the RSA engine reveals distinct signatures identifying square and multiply sections of the exponentiation operation and can reveal the secret key in a single trace (e.g., as illustrated in FIG. 1C).

Previous SCA-resistant solutions described above are targeted for a specific algorithm like AES or RSA. However, these algorithms have vastly different ranges of performance and power requirements. Building a single IVR to deliver power to the underlying engine at high efficiency is very challenging. On the other hand, the RSA engine uses the secret key only during signing operations. The performance-critical verification operation, however, only employs the public key. Therefore, RSA engines need to operate in an SCA-resistant mode only during signing. During verification, the RSA engine may need to operate in a high-performance mode to reduce verification latency. The IVR that feeds power to the RSA engine needs to comprehend these modes of operation and their varying security/efficiency trade-offs.

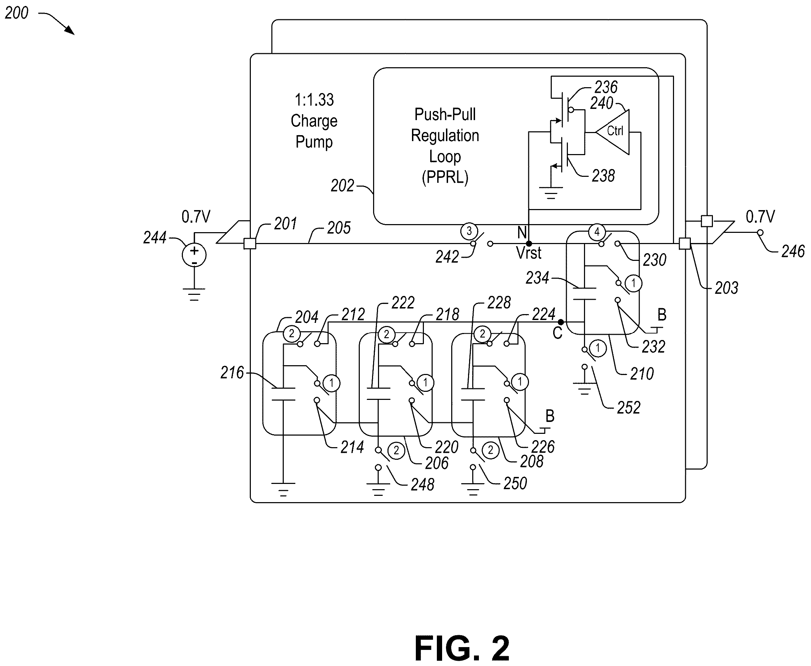

Different encryption engines have different current draws and, more importantly, have periods of activity that do not need SCA resistance, motivating the use of multiple modes within the SIVR to trade security and efficiency during these various modes of the crypto engines. The proposed SIVR architecture (e.g., as illustrated in FIG. 2) is a switched capacitor-based integrated voltage regulator solution that aims at completely isolating (both physically and electrically) the input current signature from the downstream encryption engine, breaking the correlation between the measured current signature and the data-dependent on-die switching activity. This leads to a flat current profile at the input independent of the kind of crypto engine and the associated load variations during encryption.

The disclosed SIVR architecture supports multiple modes to enhance efficiency and tradeoff its SCA resistance. As explained below, the SIVR is comprised of multiple slices or phases that can be interleaved to scale up the load current to support larger current draws. However, like typical switched capacitor converters, some of these circuits/phases can be disabled during light loads to enhance efficiency. Furthermore, the size of the switches can also be modulated to lower switching losses and improve light load efficiency.

FIG. 2 is a block diagram of a secure integrated voltage regulator (SIVR) with a push-pull regulation loop (PPRL), in accordance with some embodiments. Referring to FIG. 2, SIVR 200 includes PPRL 202, a plurality of flying capacitor (FC) circuits (e.g., FC circuits 204, 206, 208, and 210), transistor switches (or switches) 248, 250, 252, and 242, and a rail 205 coupled between an input terminal 201 and an output terminal 203. In some aspects, the term "FC tile" is interchangeable with the term "FC circuit."

In some aspects, input terminal 201 is coupled to a voltage source 244, and output terminal 203 is coupled to a cryptographic circuit input terminal 246.

In some aspects, FC circuit 210 includes FC 234 and switches 230 and 232. In some aspects, FC circuit 208 includes FC 228 and switches 224 and 226. In some aspects, FC circuit 206 includes FC 222 and switches 218 and 220. In some aspects, FC circuit 204 includes FC 216 and switches 212 and 214.

In some aspects, switches 248, 250, and 252 couple respective FC circuits 206, 208, and 210 to ground.

In some aspects, FC circuits 204, 206, and 208 are coupled to FC circuit 210 at node C.

The PPRL 202 can be configured to include a PMOS transistor 236, an NMOS transistor 238, and a control circuit 240, all coupled as illustrated in FIG. 2. In some aspects, the control circuit 240 can be configured to activate or deactivate switches (as discussed below) to enable a charge phase, a transfer phase, and a reset phase.

In some aspects, PPRL 202 is coupled to rail 205 at node N (as illustrated in FIG. 2).

The switches in FIG. 2 are also referenced to indicate one of groups 1, 2, 3, or 4, which they can be associated with. For example, switch group 1 can include switches 214, 220, 226, 252, and 232. Switch group 2 can include switches 248, 250, 212, 218, and 224. Switch group 3 can include switch 242. Switch group 4 can include switch 230.

In some aspects, the charge phase can be initiated (e.g., by control circuit 240) by turning ON switches of groups 1 and 3 and turning OFF switches of groups 2 and 4.

In some aspects, the transfer phase can be initiated (e.g., by the control circuit 240 for transferring a charge to terminal 246 of a cryptographic circuit) by turning ON switches of groups 2 and 4 and turning OFF switches of groups 1 and 3.

In some aspects, the reset phase can be initiated (e.g., by the control circuit 240) by turning ON switches of group 1 and turning OFF switches of groups 2, 3, and 4.

In some aspects, when the switches of group 1 are activated, the charge passes between FC circuit 210 and FC circuits 208, 206, and 204 via node B.

In some aspects, the SIVR architecture of FIG. 2 also supports multiple modes that can enhance efficiency and help the system tradeoff SCA resistance to overall efficiency. Some of the modes the SIVR architecture can support to enhance efficiency are as follows:
(a) Bypass mode. Since SIVR 200 can be designed for input voltage equal to output voltage, opportunistically, when the encryption engines are not operating with the key and when side-channel resistance and, therefore, security are not being questioned, the SIVR can quickly get into a bypass mode by turning on switches in groups 3 and 4. This aspect of SIVR 200 maximizes overall efficiency.
(b) LDO mode. In some aspects, SIVR 200 can also support a digital LDO mode where either switch 3 or switch 4 (or a combination of the two) are adaptively varied in size to increase its resistance and behave like a digital LDO to allow the load to lower its voltage and operate at lower power.
(c) RESET disable mode. In some aspects, SIVR 200 can be configured to facilitate a reset mode that ensures the Vrst node comes back to the same operating point to maximize security and the side channel resistance. However, when the security aspect can be traded off, the control schemes can shut down the push-pull amplifier in the operation and eliminate the "reset" feature, thereby also saving power.

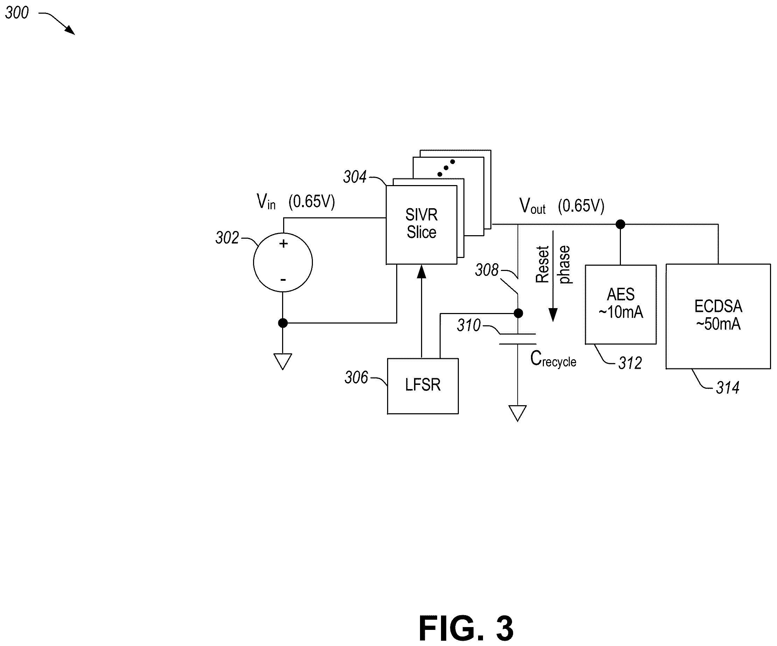

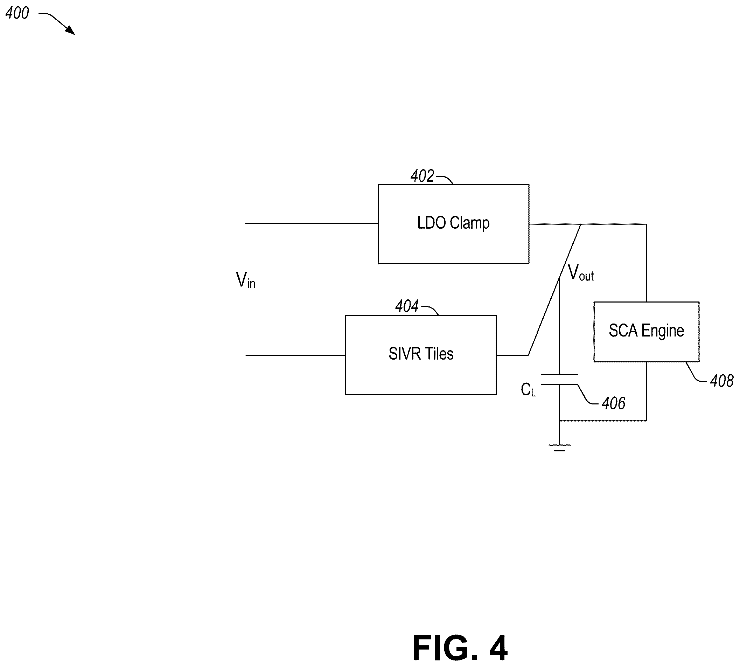

In some aspects, SIVR 200 can also support multiple efficiency enhancement modes that could not only improve efficiency but also retain security or side-channel resistance. Some of those modes are charge recycling mode (e.g., as illustrated in FIG. 3) and non-linear clamp mode (e.g., as illustrated in FIG. 4).

FIG. 3 illustrates diagram 300 of an SIVR architecture using a recycling capacitor, in accordance with some embodiments. Referring to FIG. 3, SIVR 304 (which can be the same as SIVR 200) is coupled to a voltage source 302 and one or more additional circuits (e.g., a linear feedback shift register (LFSR) 306). The output voltage Vout from the SIVR 304 can be consumed by a cryptographic engine 312 and other circuits (e.g., elliptic curve digital signature algorithm (ECDSA) 314).

As part of the SIVR architecture, the energy of the capacitors during the reset phase can alternatively also be recycled onto an auxiliary capacitor (C_{recycle}) 310 via a switch 308 (as illustrated in FIG. 3). Such charge recycling can be used for powering auxiliary circuits like the comparators and other control logic circuitry without compromising the security aspects of the SIVR 304. This feature allows the SIVR to improve its efficiency without any security tradeoff at the cost of an additional capacitor or area.

FIG. 4 is a diagram 400 of a SIVR architecture where a SIVR circuit is configured to operate as an LDO clamp, in accordance with some embodiments. Referring to FIG. 4, at least one of the SIVR circuits 404 can be coupled to SCA engine 408 and capacitor 406 and can be configured as LDO clamp 402.

In larger SCA engines like the RSA, the SIVR can also dedicate one of its slices/phases to behave like an LDO that is parallel to the other circuits/phases that will still operate in the switched capacitor mode (e.g., as illustrated in FIG. 4). This mode can be enabled to add some instantaneous droop correction to the scheme, thereby lowering the overall voltage margins and improving efficiency. With sufficient randomization, it has already been shown that the non-linear clamp can enhance side-channel resistance multi-fold in both frequency and time domains. Hence, this could be an effective strategy that can be employed as needed.

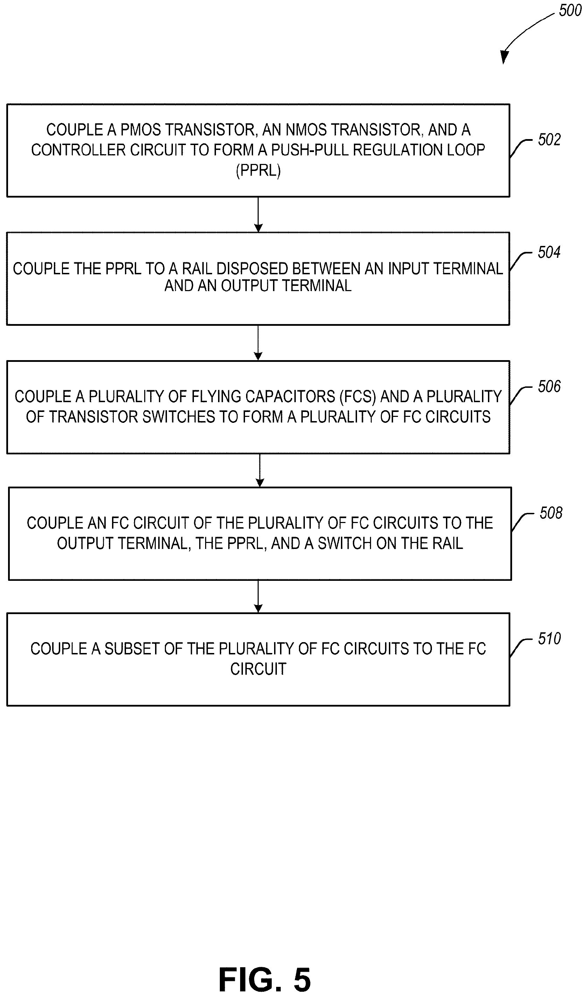

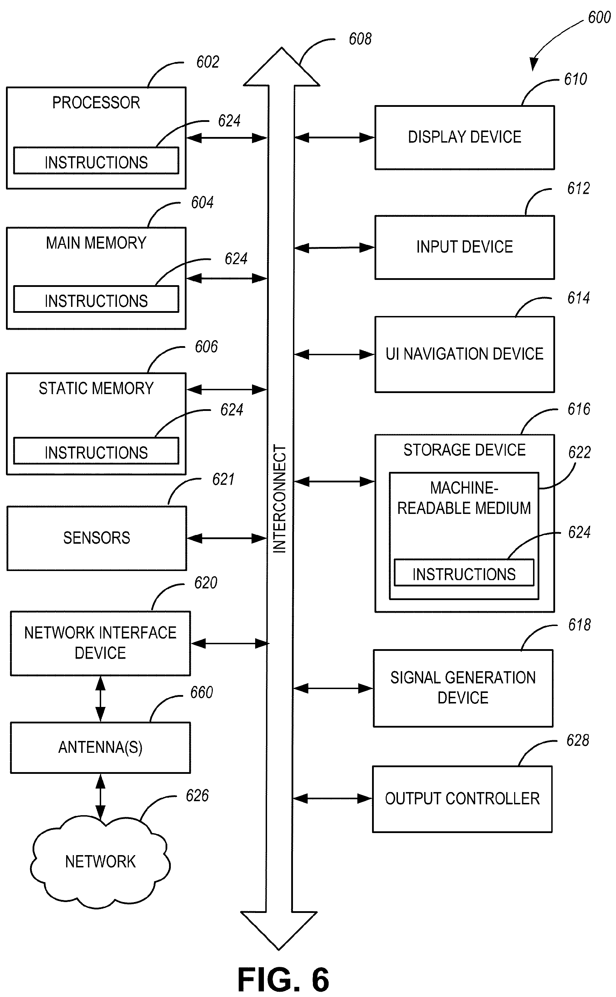

FIG. 5 is a flow diagram of an example method 500 for making a voltage regulator, in accordance with some embodiments. Referring to FIG. 5, method 500 includes operations 502, 504, 506, 508, and 510, which may be executed by a processor, an embedded controller, a receiver circuit, a transceiver circuit, or another processor of a computing device (e.g., hardware processor 602 of machine 600 illustrated in FIG. 6, which can include one or more of the circuits discussed in connection with FIGS. 1A-4). In some embodiments, one or more of the circuits discussed in connection with FIGS. 1A-4 can perform the functionalities (or include the configurations or circuitry) associated with FIG. 5, as well as one or more of the examples listed below.

At operation 502, a PMOS transistor, an NMOS transistor, and a controller circuit are coupled to form a push-pull regulation loop (PPRL).

At operation 504, the PPRL is coupled to a rail disposed between an input terminal and an output terminal.

At operation 506, a plurality of flying capacitors (FCs) and a plurality of transistor switches are coupled to form a plurality of FC circuits.

At operation 508, an FC circuit of the plurality of FC circuits is coupled to the output terminal, the PPRL, and a switch on the rail.

At operation 510, a subset of the plurality of FC circuits is coupled to the FC circuit.

FIG. 6 illustrates a block diagram of an example machine 600 upon which any one or more of the techniques (e.g., methodologies) discussed herein may perform. In alternative embodiments, the machine 600 may operate as a standalone device or may be connected (e.g., networked) to other machines. In a networked deployment, machine 600 may operate in the capacity of a server machine, a client machine, or both in server-client network environments. In an example, machine 600 may function as a peer machine in a peer-to-peer (P2P) (or other distributed) network environment. The machine 600 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 600 may include a hardware processor 602 (e.g., a central processing unit (CPU), a graphics processing unit (GPU), a hardware processor core, or any combination thereof), a main memory 604, and a static memory 606, some or all of which may communicate with each other via an interlink (e.g., bus) 608. In some aspects, the main memory 604, the static memory 606, or any other type of memory (including cache memory) used by machine 600 can be configured based on the disclosed techniques or can implement the disclosed memory devices.

Specific examples of main memory 604 include Random Access Memory (RAM) and semiconductor memory devices, which may include, in some embodiments, storage locations in semiconductors such as registers. Specific examples of static memory 606 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 600 may further include a display device 610, an input device 612 (e.g., a keyboard), and a user interface (UI) navigation device 614 (e.g., a mouse). In an example, the display device 610, the input device 612, and the UI navigation device 614 may be a touchscreen display. The machine 600 may additionally include a storage device (e.g., drive unit or another mass storage device) 616, a signal generation device 618 (e.g., a speaker), a network interface device 620, and one or more sensors 621, such as a global positioning system (GPS) sensor, compass, accelerometer, or other sensors. The machine 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 602 and/or instructions 624 may comprise processing circuitry and/or transceiver circuitry.

The storage device 616 may include a machine-readable medium 622 on which one or more sets of data structures or instructions 624 (e.g., software) embodying or utilized by any one or more of the techniques or functions described herein can be stored. Instructions 624 may also reside, completely or at least partially, within the main memory 604, within static memory 606, or the hardware processor 602 during execution thereof by machine 600. In an example, one or any combination of the hardware processor 602, the main memory 604, the static memory 606, or the storage device 616 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 622 is illustrated as a single medium, the term "machine-readable medium" may include a single medium or multiple media (e.g., a centralized or distributed database and/or associated caches and servers) configured to store instructions 624.

An apparatus of machine 600 may be one or more of a hardware processor 602 (e.g., a central processing unit (CPU), a graphics processing unit (GPU), a hardware processor core, or any combination thereof), a main memory 604 and a static memory 606, one or more sensors 621, a network interface device 620, one or more antennas 660, a display device 610, an input device 612, a UI navigation device 614, a storage device 616, instructions 624, a signal generation device 618, and an output controller 628. The apparatus may be configured to perform one or more of the methods and/or operations disclosed herein. The apparatus may be intended as a component of machine 600 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 600 and that causes machine 600 to perform any one or more of the techniques of the present disclosure or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 624 may further be transmitted or received over a communications network 626 using a transmission medium via the network interface device 620 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.8.4 family of standards, a Long Term Evolution (LTE) family of standards, a Universal Mobile Telecommunications System (UMTS) family of standards, peer-to-peer (P2P) networks, among others.

In an example, the network interface device 620 may include one or more physical jacks (e.g., Ethernet, coaxial, or phone jacks) or one or more antennas to connect to the communications network 626. In an example, the network interface device 620 may include one or more antennas 660 to wirelessly communicate using at least one single-input multiple-output (SIMO), multiple-input multiple-output (MIMO), or multiple-input single-output (MISO) techniques. In some examples, the network interface device 620 may wirelessly communicate using multiple-user MIMO techniques. The term "transmission medium" shall be taken to include any intangible medium that can store, encode, or carry instructions for execution by machine 600 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an apparatus comprising an input terminal and an output terminal coupled via a communication rail; a PMOS transistor comprising a drain terminal coupled to the output terminal; an NMOS transistor comprising a drain terminal coupled to a source terminal of the PMOS transistor; a control circuit comprising an output terminal coupled to a gate terminal of the NMOS transistor; and a first flying capacitor (FC) circuit, the first FC circuit coupled to an input terminal of the control circuit and the drain terminal of the NMOS transistor.

In Example 2, the subject matter of Example 1 includes subject matter where a gate terminal of the PMOS transistor is coupled to the gate terminal of the NMOS transistor.

In Example 3, the subject matter of Example 2 includes subject matter where a source of the NMOS transistor is coupled to a ground terminal.

In Example 4, the subject matter of Example 3 includes subject matter where the first FC circuit further comprises a first transistor switch (TS) coupled to the output terminal and the drain of the NMOS transistor; a second TS coupled to a common node; and a first FC coupled to the first TS and the second TS.

In Example 5, the subject matter of Example 4 includes a second FC circuit, the second FC circuit comprising a third TS coupled to the first FC circuit, a fourth TS coupled to the third TS and the common node, and a second FC coupled to the third TS and the fourth TS.

In Example 6, the subject matter of Example 5 includes a third FC circuit, the third FC circuit comprising a fifth TS coupled to the first FC circuit, a sixth TS coupled to the second FC, and a third FC coupled to the fifth TS and the sixth TS.

In Example 7, the subject matter of Example 6 includes a fourth FC circuit, the fourth FC circuit comprising a seventh TS coupled to the first FC circuit, an eighth TS coupled to the third FC, and a fourth FC coupled to the seventh TS and the eighth TS.

In Example 8, the subject matter of Example 7 includes a ninth TS coupling the third FC to the ground terminal, a tenth TS coupling the second FC to the ground terminal, and an eleventh TS coupling the first FC to the ground terminal.

In Example 9, the subject matter of Example 8 includes a twelfth TS coupled to the input terminal and the first FC circuit.

In Example 10, the subject matter of Example 9 includes a voltage source coupled to the input terminal.

In Example 11, the subject matter of Examples 7-10 includes a system-on-chip (SoC), the SoC comprising an integrated circuit (IC), the IC comprising at least two of the following: the NMOS transistor, the PMOS transistor, the control circuit, the first FC circuit, the second FC circuit, the third FC circuit, and the fourth FC circuit.

In Example 12, the subject matter of Example 11 includes subject matter where the SoC further comprises at least one connector and wherein the at least one connector conforms with at least one of Universal Serial Bus (USB), High-Definition Multimedia Interface (HDMI), Thunderbolt, Peripheral Component Interconnect Express (PCIe), and Ethernet specifications.

Example 13 is an apparatus comprising a push-pull regulation loop (PPRL) comprising a PMOS transistor, an NMOS transistor, and a control circuit; an input terminal and an output terminal, the input terminal and the output terminal coupled to a node of the PPRL via a rail; and a plurality of flying capacitor (FC) circuits comprising a corresponding plurality of FCs, the plurality of FC circuits coupled to each other, at least a first FC circuit of the plurality of FC circuits coupled to the rail, and an FC circuit of the plurality of FC circuits further comprising at least a first transistor switch and a second transistor switch coupled to a corresponding capacitor of the plurality of capacitors.

In Example 14, the subject matter of Example 13 includes a third transistor switch coupled between the input terminal and the node of the PPRL; and a fourth transistor switch coupled between the node of the PPRL and the output terminal.

In Example 15, the subject matter of Example 14 includes subject matter where the first transistor switch is associated with a first plurality of transistor switches corresponding to the plurality of FC circuits, and wherein the second transistor switch is associated with a second plurality of transistor switches corresponding to the plurality of FC circuits.

In Example 16, the subject matter of Example 15 includes subject matter where the controller circuit causes charging of one or more of the plurality of FCs based on activating the third transistor switch and the first plurality of transistor switches and deactivating the fourth transistor switch and the second plurality of transistor switches.

In Example 17, the subject matter of Example 16 includes subject matter where the controller circuit causes transferring a charge of the one or more of the plurality of FCs to the output terminal based on deactivating the third transistor switch and the first plurality of transistor switches and activating the fourth transistor switch and the second plurality of transistor switches; and a reset of voltage at the node of the PPRL based on activating the first plurality of transistor switches and deactivating the third transistor switch, the fourth transistor switch, and the second plurality of transistor switches.

In Example 18, the subject matter of Examples 13-17 includes subject matter where an FC in a first FC circuit of the plurality of FC circuits is coupled to the rail and wherein one or more FCs in a subset of the plurality of FCs are serially coupled to each other and the FC in the first FC circuit.

In Example 19, the subject matter of Examples 13-18 includes a recycle capacitor coupled to a random number generator and the output terminal via a reset switch.

Example 20 is a process of making a voltage regulator, comprising coupling a PMOS transistor, an NMOS transistor, and a controller circuit to form a push-pull regulation loop (PPRL); coupling the PPRL to a rail disposed between an input terminal and an output terminal; coupling a plurality of flying capacitors (FCs) and a plurality of transistor switches to form a plurality of FC circuits; coupling an FC circuit of the plurality of FC circuits to the output terminal, the PPRL, and a switch on the rail; and coupling a subset of the plurality of FC circuits to the FC circuit.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus comprising:
an input terminal and an output terminal coupled via a communication rail;
a PMOS transistor comprising a drain terminal coupled to the output terminal;
an NMOS transistor comprising a drain terminal coupled to a source terminal of the PMOS transistor;
a control circuit comprising an output terminal coupled to a gate terminal of the NMOS transistor; and
a first flying capacitor (FC) circuit, the first FC circuit coupled to an input terminal of the control circuit and the drain terminal of the NMOS transistor.

2. The apparatus of claim 1, wherein a gate terminal of the PMOS transistor is coupled to the gate terminal of the NMOS transistor.

3. The apparatus of claim 2, wherein a source of the NMOS transistor is coupled to a ground terminal.

4. The apparatus of claim 3, wherein the first FC circuit further comprises:
a first transistor switch (TS) coupled to the output terminal and the drain of the NMOS transistor;
a second TS coupled to a common node; and
a first FC coupled to the first TS and the second TS.

5. The apparatus of claim 4, further comprising
a second FC circuit, the second FC circuit comprising:
a third TS coupled to the first FC circuit;
a fourth TS coupled to the third TS and the common node; and
a second FC coupled to the third TS and the fourth TS.

6. The apparatus of claim 5, further comprising
a third FC circuit, the third FC circuit comprising:
a fifth TS coupled to the first FC circuit;
a sixth TS coupled to the second FC; and
a third FC coupled to the fifth TS and the sixth TS.

7. The apparatus of claim 6, further comprising
a fourth FC circuit, the fourth FC circuit comprising:
a seventh TS coupled to the first FC circuit;
an eighth TS coupled to the third FC; and
a fourth FC coupled to the seventh TS and the eighth TS.

8. The apparatus of claim 7, further comprising
a ninth TS coupling the third FC to the ground terminal;
a tenth TS coupling the second FC to the ground terminal; and
an eleventh TS coupling the first FC to the ground terminal.

9. The apparatus of claim 8, further comprising:
a twelfth TS coupled to the input terminal and the first FC circuit.

10. The apparatus of claim 9, further comprising:
a voltage source coupled to the input terminal.

11. The apparatus of claim 7, further comprising:
a system-on-chip (SoC), the SoC comprising an integrated circuit (IC), the IC comprising at least two of the NMOS transistor, the PMOS transistor, the control circuit, the first FC circuit, the second FC circuit, the third FC circuit, or the fourth FC circuit.

12. The apparatus of claim 11, wherein the SoC further comprises at least one connector, and wherein the at least one connector conforms with at least one of a Universal Serial Bus (USB) specification, a High-Definition Multimedia Interface (HDMI) specification, a Thunderbolt specification, a Peripheral Component Interconnect Express (PCIe) specification, or an Ethernet specification.

13. A process of making a voltage regulator, comprising:
coupling a PMOS transistor, an NMOS transistor, and a controller circuit to form a push-pull regulation loop (PPRL);
coupling the PPRL to a rail disposed between an input terminal and an output terminal;
coupling a plurality of flying capacitors (FCs) and a plurality of transistor switches to form a plurality of FC circuits;
coupling an FC circuit of the plurality of FC circuits to the output terminal, the PPRL, and a switch on the rail; and
coupling a subset of the plurality of FC circuits to the FC circuit.

14. The method of claim 13, further comprising:
coupling a first transistor switch (TS) to the output terminal and a drain of the NMOS transistor.

15. A computer program comprising instructions which, when the program is executed by a computer, cause the computer to carry out a method as claimed in any one of claims 13 or 14.
